# EUROPÄISCHE PATENTANMELDUNG

(11) **EP 3 430 901 A1**
(43) Veröffentlichungstag der Anmeldung: **23.01.2019**
(21) Anmeldenummer: 18182701.5
(22) Anmeldetag: 10.07.2018
(51) Int. Cl.: A01M 7/00, B05B 7/32

(54) **SPRITZSYSTEM FÜR LANDWIRTSCHAFTLICHE FELDSPRITZEN SOWIE VERFAHREN ZUR REGELUNG DES DRUCKS IN ZUMINDEST EINEM VERSORGUNGSLEITUNGSKREIS EINES SPRITZSYSTEMS FÜR LANDWIRTSCHAFTLICHE FELDSPRITZEN**

(30) Priorität: 19.07.2017 DE 102017116234
(71) Anmelder: HORSCH LEEB Application Systems GmbH, 94562 Oberpöring (DE)
(72) Erfinder: Leeb, Theodor, 94562 Oberpöring (DE)
(74) Vertreter: Glück Kritzenberger Patentanwälte PartGmbB

(57) **Zusammenfassung**

Die Erfindung betrifft ein Spritzsystem (1) für landwirtschaftliche Feldspritzen zum Ausbringen von flüssigen Pflanzenschutzmitteln oder Düngemitteln umfassend zumindest einen Vorratsbehälter (4) zur Aufnahme des auszubringenden flüssigen Pflanzenschutzmittels oder Düngemittels, zumindest eine Spritzdüsenanordnung (5, 5', 5") mit mehreren Spritzdüsen, die über zumindest einen Versorgungsleitungskreis (6) mit dem Vorratsbehälter (4) strömungstechnisch verbunden sind, und zumindest einer Flüssigkeitspumpe (7) zur Förderung des flüssigen Pflanzenschutzmittels oder Düngemittels aus dem Vorratsbehälter (4) über den Versorgungsleitungskreis (6) an die zumindest eine Spritzdüsenanordnung (5, 5', 5") unter einem vorgegebenen Druck, bei dem zur Regelung des Druckes im Versorgungsleitungskreis (6) zumindest eine Gleichdruckreglereinheit in einem parallel zu der zumindest einen Flüssigkeitspumpe (7) geschalteten und strömungstechnisch mit dem Versorgungsleitungskreis (6) verbundenen Überleitungskreis (11) angeordnet ist. Vorteilhaft ist die Gleichdruckreglereinheit als hydraulisches Druckregelventil (8) mit einem Hydraulikdruckraum (8.4) ausgebildet, wobei der Hydraulikdruckraum (8.4) strömungstechnisch mit einem Hydraulikversorgungskreis (12) verbunden ist, mittels dem ein vorgegebener, vorzugsweise konstanter Hydraulikdruck im Hydraulikdruckraum (8.4) bereitgestellt wird. Ebenfalls ist Gegenstand der Erfindung ein Verfahren zur Regelung des Drucks in zumindest einem Versorgungsleitungskreis eines Spritzsystems für landwirtschaftliche Feldspritzen.

## Beschreibung

### Technisches Gebiet

Die Erfindung bezieht sich auf ein Spritzsystem für landwirtschaftliche Feldspritzen sowie ein zugehöriges Verfahren zur Regelung des Drucks in zumindest einem Versorgungsleitungskreis eines Spritzsystems für landwirtschaftliche Feldspritzen gemäß dem Oberbegriff der Patentansprüche 1 und 11.

### Stand der Technik

Vorrichtungen zum Ausbringen von flüssigen Pflanzenschutzmitteln wie bspw. Pestiziden oder Fungiziden und/oder flüssigen Düngemitteln oder dergl. Flüssigkeiten im landwirtschaftlichen Bereich sind hinlänglich bekannt. Derartige Vorrichtungen werden auch als Feldspritzen bezeichnet, welche beispielsweise als selbstfahrende Feldspritzen oder mittels eines Zugfahrzeuges gezogene oder als an einem Zugfahrzeug angebaute Feldspritzen realisiert sein können.

Derartige Feldspritzen weisen zumindest eine quer zur Fahrtrichtung angeordnete Verteilvorrichtung in Form eines Spritzgestänges in unterschiedlichsten Ausführungsvarianten auf. Ziel dieser Feldspritzen ist es, ein definiertes Volumen an Pflanzenschutzmittel gleichmäßig bzw. in einer vorgegebenen Ausbringmenge auf einer landwirtschaftlichen Fläche bzw. auf einem Pflanzenbestand auszubringen, wobei das Verteilen jeweils möglichst in Abhängigkeit vom auszubringenden flüssigen Pflanzenschutzmittel in verschiedensten Verteilmustern erfolgen soll. Die Verteilmuster können hierbei in unterschiedlichen Parametern variieren, so kann die Pflanzenschutzflüssigkeit beispielsweise in grobe oder feine Tropfen zerstäubt werden und/oder Spritzkegel mit unterschiedlich breiten Kegeldurchmessern erzeugt werden und/oder der zum Aufbringen der Pflanzenschutzmittel auf dem Pflanzenbestand eingestellte Druck variiert werden. Aus der DE 10 2014 112 441 A1 ist beispielsweise eine Feldspritze sowie System zur Regelung der jeweiligen Ausbringmenge einer derartigen Feldspritze bekannt.

Um verschiedenste Verteil- bzw. Ausbringmuster erzeugen zu können, sind aus dem Stand der Technik bereits diverse Lösungsansätze bekannt. Bei bekannten Feldspritzen ist hierzu beispielsweise am Spritzgestänge eine Spritzdüsenanordnung mit mehreren Spritzdüsen vorgesehen, wobei die Spritzdüsen beabstandet zueinander angeordnet und näherungsweise gleichmäßig über das Spritzgestänge verteilt sind. Beispielsweise können auch anstelle von einzelnen Spritzdüsen so genannte Spritzdüsenstöcke vorgesehen sein, die ihrerseits zumindest eine, vorzugsweise mehrere einzelne Spritzdüsen aufweisen. Die Spritzdüsen eines Spritzdüsenstockes sind hierbei in Abhängigkeit von deren Aufbau zur Erzeugung eines zum Boden bzw. zum Pflanzenbestand hin ausgerichteten Spritzkegels bzw. eines jeweils von der Spritzdüse abhängigen Verteilmusters ausgebildet.

Um das Verteilmuster noch weiter variieren zu können, kann u.a. der Druck mit dem das flüssige Pflanzenschutzmittel an das Spritzdüsengestänge bzw. die Spritzdüsenanordnung gefördert wird, sowie die Ausbringmenge geändert werden. Dabei können sowohl das Druckniveau als auch die Ausbringmenge nur innerhalb bestimmter Grenzen, welche wiederum von der Ausgestaltung bzw. dem Aufbau der Spritzdüsen abhängig sind, verwendet werden, da die Spritzdüsen u.a. jeweils nur für einen bestimmten Druckbereich eingerichtet sind. Auch finden so genannte Mehrfachspritzdüsenstöcke Verwendung, die mehrere, beispielsweise zwei oder vier unterschiedliche Ausgestaltungen von Spritzdüsen aufweisen, mittels denen verschiedene Verteilmuster erzeugen werden können.

Derartige Feldspritzen können beispielsweise eine Arbeitsbreiten von bis zu 49 Meter aufweisen. Hier finden Spritzgestänge Verwendung, die sich über mehrere Teilbreiten erstrecken, wobei deren Spritzdüsen über ganze Teilbreiten jeweils separat zu- bzw. abschaltbar sind. Dadurch kann eine Doppelbehandlung mit Pflanzenschutzmittel effektiv vermieden werden. Eine derartige Teilbreitenschaltung ist beispielsweise aus der DE 20 2016 101 158 U1 bekannt. Dieses Zu- bzw. Abschalten von Teilbreiten kann jedoch in den Spritzdüsen von der Abschaltung nicht betroffenen Teilbreiten zu einer Veränderung des Druckniveaus führen, was nachteilig zu einer ungewünschten Erhöhung bzw. Verringerung der Ausbringmenge führen kann, sofern keines Anpassung des Druckniveaus im Versorgungsleitungskreis des zugehörigen Spritzsystems der Feldspritze erfolgt, beispielsweise durch Anpassung der Förderleistung einer strömungstechnisch mit dem Versorgungskreis verbundenen Pumpeneinheit. Eine derartige Anpassung der Förderleistung erfordert nachteilig jedoch eine aufwendige Steuersoftware, die darüber hinaus nur eine langsame Anpassung ermöglicht. Insbesondere bei hohen Fahrgeschwindigkeiten, beispielsweise im Bereich von 20km/h ist jedoch ein schnelles Zu- bzw. Abschalten der Teilbreiten erforderlich. Die hierzu erforderliche Regelung des Druckniveaus im Versorgungsleitungskreis mittels derartiger Softwarelösungen ist jedoch nicht ohne hohen technischen Aufwand realisierbar.

Zur Vermeidung von derartig aufwendigen Softwarelösungen finden im Stand der Technik häufig auch so sogenannte Gleichdruckregler bzw. Gleichdruckregelsysteme Verwendung, deren Aufbau und Funktionsweise bekannt sind. Diese verfügen u.a. über einen Arbeitskolben über eine Überströmungsleitung zum Abführen des im Versorgungsleitungskreis unter Druck geförderten flüssigen Pflanzenschutz- oder Düngemitteln aus dem Versorgungsleitungskreis eine automatische Anpassung des Druckniveaus im Versorgungsleitungskreis ermöglichen. Derartige Gleichdruckregler bzw. Gleichdruckreglereinheiten können beispielsweise elektrisch oder pneumatisch betrieben werden und sind abhängig davon technisch unterschiedlich aufgebaut.

Nachteilig ist beispielsweise für die Verwendung eines pneumatischen Gleichdruckreglers entweder an der Feldspritze selbst oder an der Zugmaschine eine pneumatische Versorgungseinheit, beispielsweise in Form einer Kompressoreinheit zur Erzeugung von Druckluft erforderlich. Bei einem elektrischen Gleichdruckregler wird der Arbeitskolben jeweils mittels einer über einen Elektromotor vorgespannten Druckfeder auf den zu regelnden Druck eingestellt. Hier ist eine Energieversorgung in Form einer entsprechend dimensionierten Strom- bzw. Spannungsquelle erforderlich, welche insbesondere bei Zugmaschinen älteren Baujahrs nicht gegeben ist. Die Anbringung derartiger zusätzlicher pneumatischer oder elektrischer Versorgungseinheiten an der Feldspritze ist jedoch sehr kostenintensiv. Darüber hinaus sind elektrische als auch pneumatische Gleichdruckregler mitunter sehr träge, zum einen ist aufgrund Kompressibilität der Druckluft eine Mindestschaltdauer erforderlich, um den gewünschten Druck im Versorgungsleitungskreis aufzubauen. Ähnlich verhält es sich mit elektrischen Regelsystemen, die zur Erreichung der Vorspannung der Druckfeder im Gleichdruckregler ebenfalls eine Mindestbetätigungszeit erfordern.

Trotz der aus dem Stand der Technik bekannten Lösungen ist es daher wünschenswert Spritzsysteme für landwirtschaftliche Feldspritzen bereitzustellen, welche auch an Zugfahrzeugen ohne eigenen pneumatischen oder elektrischen Energieversorgungseinheiten betrieben werden können und insbesondere auch ein schnelles Zu- und Abschalten von Spritzdüsen unterschiedlicher Teilbreiten unterstützten.

### Darstellung der Erfindung

Aufgabe der vorliegenden Erfindung ist es daher ein Spritzsystem für landwirtschaftliche Feldspritzen sowie ein zugehöriges Verfahren zur Regelung des Drucks in einem Versorgungsleitungskreis eines derartigen Spritzsystems zur Verfügung zu stellen, die die Nachteile des Standes der Technik überwinden. Diese Aufgabe wird erfindungsgemäß durch das erfindungsgemäße Spritzsystem gemäß dem unabhängigen Anspruch 1 und ein Verfahren gemäß dem unabhängigen Anspruch 11 gelöst.

Ein wesentlicher Aspekt des erfindungsgemäßen Spritzsystem ist darin zu sehen, dass die Gleichdruckreglereinheit als hydraulisches Druckregelventil mit einem Hydraulikdruckraum ausgebildet ist, wobei der Hydraulikdruckraum strömungstechnisch mit einem Hydraulikversorgungskreis verbunden ist, mittels dem ein vorgegebener, vorzugsweise konstanter Hydraulikdruck im Hydraulikdruckraum bereitgestellt wird. Durch die Verwendung eines hydraulischen Druckregelventils mit zugeordneten eigenen Hydraulikversorgungskreis wird die Regelung des Druckniveaus im Versorgungsleitungskreis des Spritzsystems wesentlich vereinfacht, insbesondere der Ausgleich von an durch Zu- oder Abschalten von Teilbreiten des Spritzgestänges entstehende Änderung des Druckniveaus im Versorgungsleitungskreis beschleunigt. Es ist hierzu besonders vorteilhaft lediglich eine Anpassung des Hydraulikdruckes im Hydraulikdruckraum des hydraulischen Druckregelventils erforderlich oder die Anpassung eines gestiegenen Druckniveaus im Versorgungsleitungskreis erfolgt automatisch durch das Durchschalten des Überleitungskreises mittels des hydraulischen Druckregelventils. Häufg sind Hydrauliksysteme bei Zugfahrzeugen, insbesondere auch älteren Baujahrs vorhanden, so dass besonders vorteilhaft das erfindungsgemäße Spitzsystem für den Betrieb an einer Vielzahl von Zugfahrzeugen geeignet ist.

Vorteilhaft weist das hydraulische Druckregelventil ein sich entlang einer Längsachse erstreckendes Ventilgehäuse auf, welches zumindest einen Kolbenraum einschließt, in dem ein Ventilkolben entlang der Längsachse verschiebbar geführt ist. Insbesondere schließt sich an den Kolbenraum entlang der Längsachse der Hydraulikdruckraum an, in den ein freies Kolbenende des Ventilkolbens hineinragt. Das Ventilgehäuse verfügt ferner über eine Zugangsöffnung zur Zuführung von Flüssigkeit in den Kolbenraum und eine Abführungsöffnung zur Abführung von Flüssigkeit aus dem Kolbenraum. Besonders vorteilhaft ist bei der erfindungsgemäßen Ausgestaltung des hydraulischen Druckregelventils eine von im Hydraulikdruckraum vorhandenen Hydraulikdruck abhängige Einstellung des Referenzdruckes im Kolbenraum schnell und einfach möglich. Zusätzlich wird der Ventilkolben in einer fluiddichten Durchführungsöffnung durch das Ventilgehäuse geführt, d.h. der sich über den Kolbenraum und die Hydraulikdruckraum erstreckende Ventilkolben ist frei beweglich entlang der Längsachse im Ventilgehäuse angeordnet.

Vorteilhaft ist im geschlossenen Zustand des hydraulischen Druckregelventils die Zuführungsöffnung vom freien Kolbenende des Ventilkolbens verschlossen und im geöffneten Zustand des hydraulischen Druckregelventils sind die Zuführungs- und Abführungsöffnung freigegeben, so dass über den Überleitungskreis eine Rückführung von überschüssigen flüssigen Pflanzenschutzmittel bzw. Düngemittel in den Vorratsbehälter oder dem der Pumpeneinheit vorgeschalteten Abschnitt des Versorgungsleitungskreises möglich ist. Der Überleitungskreis ist hierzu entsprechend eingerichtet bzw. das hydraulische Druckregelventil entsprechend strömungstechnisch mit dem Versorgungsleitungskreis verbunden.

In einer bevorzugten Ausführungsvariante weist das hydraulische Druckregelventil ein Übersetzungsverhältnis auf, dass von der unterschiedlichen Dimensionierung der wirksamen Flächen der freien Kolbenenden des Ventilkolbens abhängig ist. Besonders vorteilhaft kann hier ein nahezu beliebiges Übersetzungsverhältnis zwischen dem Referenzdruck und dem Hydraulikdruck eingestellt werden, welches beispielsweise 1:10 oder 1:20 beträgt.

In vorteilhaften Ausführungsvariante weist der Versorgungsleitungskreis zwischen der zumindest einen Pumpeneinheit und der zumindest einen Spritzdüsenanordnung zumindest eine Durchflussmesseinheit und/oder zumindest eine Drucksensoreinheit auf. Die hierüber erhaltenen Messwerte können in einer Steuereinheit ausgewertet und zur Anpassung bzw. Regelung des Spritzdruckes oder sonstiger Spritzparameter des Spritzsystems verwendet werden.

Weiterhin vorteilhaft sind im Hydraulikversorgungskreis zumindest eine Drucksensoreinheit, zumindest eine Druckspeichereinheit und zumindest eine Ventilanordnung vorgesehen, welche zur Bereitstellung eines vorgegebenen, vorzugsweise konstante Hydraulikdruckes im Hydraulikdruckraum des hydraulischen Druckregelventils dienen.

Ferner ist Gegenstand der Erfindung ein Verfahren zur Regelung des Drucks in zumindest einem Versorgungsleitungskreises eines Spritzsystems für landwirtschaftliche Feldspritzen umfassend zumindest einen Vorratsbehälter zur Aufnahme eines auszubringenden flüssigen Pflanzenschutzmittels oder Düngemittels, zumindest eine Spritzdüsenanordnung mit mehreren Spritzdüsen, die über zumindest einen Versorgungsleitungskreis mit dem Vorratsbehälter strömungstechnisch verbunden sind, bei dem mittels zumindest einer Flüssigkeitspumpe das flüssige Pflanzenschutzmittel oder Düngemittel aus dem Vorratsbehälter über den Versorgungsleitungskreis an die zumindest eine Spritzdüsenanordnung unter einem vorgegebenen Druck gefördert wird, wobei der Druck im Versorgungsleitungskreis mittels zumindest einer Gleichdruckreglereinheit geregelt wird, die in einem parallel zu der zumindest einen Flüssigkeitspumpe geschalteten und strömungstechnisch mit dem Versorgungsleitungskreis verbundenen Überleitungskreis angeordnet ist. Besonders vorteilhaft wird mittels einer als hydraulisches Druckregelventil ausgebildeten Gleichdruckreglereinheit ein über den Hydraulikdruck des hydraulischen Druckregelventils eingestellter Referenzdruck überwacht, wobei bei einem den Referenzdruck überschreitenden Druck im Versorgungsleitungskreis das hydraulische Druckregelventil geöffnet und bei einem den Referenzdruckes unterschreitenden oder diesen entsprechenden Druck im Versorgungsleitungskreis das hydraulische Druckregelventil geschlossen wird. Die hydraulische Regelung des Drucks im Versorgungsleitungskreis ist im Vergleich zu einer pneumatischen oder elektrischen Gleichdruckregeleinheit deutlich schneller und erfordert keine zusätzlichen Versorgungseinheiten, da bei einem Großteil der noch in Betrieb befindlichen Zugfahrzeugen, insbesondere Traktoren bereits eine Hydraulikversorgung vorzufinden ist.

Weiterhin vorteilhaft wird in einem dem hydraulischen Druckregelventil zugeordneten Hydraulikversorgungskreis ein vorgegebener, vorzugsweise konstanter Hydraulikdruck erzeugt, der in einem Hydraulikdruckraum des hydraulischen Druckregelventils bereitgestellt wird. Über die Regelung des Hydraulikdruckes des Hydraulikversorgungskreis ist damit eine einfache und schnelle Regelung des Drucks im Versorgungsleitungskreis möglich.

In einer bevorzugten Ausführungsvariante wird bei einem den Referenzdruck überschreitenden Druck im Versorgungsleitungskreis durch Öffnen des hydraulischen Druckregelventils der Überleitungskreis strömungstechnisch solange durchgeschaltet, bis der Referenzdruck im Versorgungsleitungskreis wieder erreicht wird.

Weiterhin vorteilhaft kann ein durch ein Öffnen des hydraulischen Druckregelventils bedingte Erhöhung des Hydraulikdruckes im Hydraulikdruckraum bzw. dem daran angeschlossenen Hydraulikversorgungskreis in einer im Hydraulikversorgungskreis vorgesehenen Druckspeichereinheit zwischengespeichert werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: beispielhaft eine Frontansicht eines Zugfahrzeuges mit einer Feldspritze umfassend ein erfindungsgemäßes Spritzsystem;
- Fig. 2: beispielhaft ein Blockschaltbild eines erfindungsgemäßen Spritzsystems umfassend ein hydraulische Druckregelventil mit Hydraulikversorgungskreis;
- Fig. 3: beispielhaft in einer vergrößerten Ausschnittsdarstellung des Blockschaltbildes das hydraulische Druckregelventil mit Hydraulikversorgungskreis und
- Fig. 4 - 6: beispielhaft drei unterschiedliche Ausführungsvarianten des Hydraulikversorgungskreises, insbesondere dessen Ventilanordnung.

### Wege zur Ausführung der Erfindung

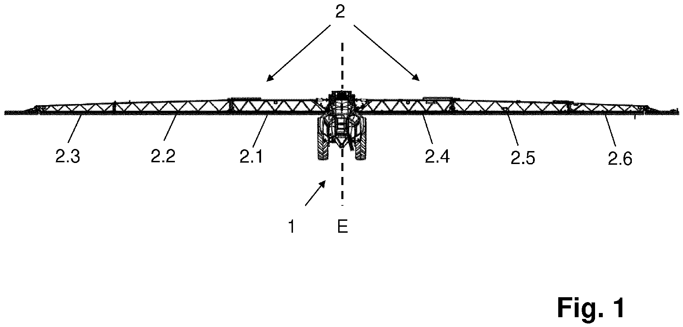

In Figur 1 ist beispielhaft eine Vorderansicht einer landwirtschaftlichen Feldspritze 1 zum Ausbringen bzw. zur Applikation von flüssigen Pflanzenschutzmitteln wie bspw. Pestiziden oder Fungiziden oder flüssigen Düngemitteln oder dergleichen Flüssigkeiten dargestellt. Derartige landwirtschaftlichen Feldspritzen 1 weisen ein quer zur Fahrtrichtung orientiertes Spritzgestänge 2 auf, welches sich über eine oder mehrere Teilbreiten 2.1 - 2.6 erstreckt. Derartige landwirtschaftliche Feldspritzen 1 können beispielsweise als selbstfahrende oder mittels eines Zugfahrzeuges gezogene oder als an einem Zugfahrzeug angebaute Feldspritzen ausgebildet sein.

Die in Figur 1 dargestellte landwirtschaftlichen Feldspritze 1 weist beispielsweise ein Spritzgestänge 2 auf, welches sich über sechs Teilbreiten 2.1 bis 2.6 erstreckt, und zwar vorzugsweise symmetrisch zu einer die Fahrtrichtung aufnehmenden vertikalen Ebene E.

Die Feldspritze 1 weist zumindest ein erfindungsgemäßes Spritzsystem 3 umfassend einen Vorratsbehälter 4 zur Aufnahme des auszubringenden flüssigen Pflanzenschutzmittel oder flüssigen Düngemittels und zumindest eine Spritzdüsenanordnung 5, 5', 5" mit mehreren Spritzdüsen auf, die über zumindest einen Versorgungsleitungskreis 6 mit dem Vorratsbehälter 4 strömungstechnisch verbunden sind.

Ferner ist zumindest eine Flüssigkeitspumpe 7 zur Förderung des flüssigen Pflanzenschutzmittels oder Düngemittels vom Vorratsbehälter 4 über den Versorgungsleitungskreis 6 an die zumindest eine Spritzdüsenanordnung 5, 5', 5" unter einem vorgegebenen Druck vorgesehen, welche hierzu im Versorgungsleitungskreis 6 zwischen dem Vorratsbehälter 4 und der zumindest einen Spritzdüsenanordnung 5, 5', 5" angeordnet ist. Die Flüssigkeitspumpe 7 kann beispielsweise als Kolbenpumpe oder als Zentrifugalpumpe ausgeführt sein, deren Drehzahl abhängig von der aktuellen Fahrtgeschwindigkeit der Zugmaschine regelbar ist.

Zur Regelung des Druckniveaus im Versorgungsleitungskreis 6 bzw. des Druckes, mit dem das im Versorgungsleitungskreis 6 befindliche flüssige Pflanzenschutzmittel oder Düngemittel an die zumindest eine Spritzdüsenanordnung 5, 5', 5" gefördert wird, ist zumindest eine Gleichdruckreglereinheit vorgesehen, welche in einem parallel zu der zumindest einen Flüssigkeitspumpe 7 geschalteten und strömungstechnisch mit dem Versorgungsleitungskreis 6 verbundenen Überleitungskreis 11 angeordnet ist.

Erfindungsgemäß ist die Gleichdruckreglereinheit als hydraulisches Druckregelventil 8 mit einem Hydraulikdruckraum 8.4 ausgebildet, wobei der Hydraulikdruckraum 8.4 strömungstechnisch mit einem Hydraulikversorgungskreis 12 verbunden ist, mittels dem ein vorgegebener, vorzugsweise konstanter hydraulischer Druck im Hydraulikdruckraum 8.4 bereitgestellt wird.

Das hydraulisches Druckregelventil 8 weist ein sich entlang einer Längsachse LA erstreckendes Ventilgehäuse 8.1 auf, welches einen Kolbenraum 8.2 einschließt, in dem ein Ventilkolben 8.3 entlang der Längsachse LA verschiebbar geführt ist. Ferner schließt sich entlang der Längsachse LA an den Kolbenraum 8.2 der Hydraulikdruckraum 8.4 an, in den das eine freie Kolbenende 8.3' des Ventilkolbens 8.3 hineinragt.

Das Ventilgehäuse 8.1 verfügt über eine Zuführungsöffnung 8.11, über welche Flüssigkeit in den Kolbenraum 8.2 zuführbar ist, und eine Abführungsöffnung 8.12, über welche Flüssigkeit aus dem Kolbenraum 8.2 wieder abführbar ist. Die Zuführungsöffnung 8.11 ist über das weitere freie Ende 8.3" des Ventilkolbens 8.3 verschließbar ist. Das hydraulische Druckregelventil 8 ist über die Zuführungsöffnung 8.11 und die Abführungsöffnung 8.12 in den Überleitungskreis 11 eingeschaltet und ermöglicht somit die Realisierung eines "Bypasses" zur Rückführung des flüssigen Pflanzenschutzmittels oder Düngemittels in den Vorratsbehälter 4 oder in den Versorgungsleitungskreis 6, und zwar in den Abschnitt zwischen der Pumpeneinheit 7 und dem Vorratsbehälter 4. Durch zumindest zeitweises Durchschalten des Überleitungskreises 11 mittels des erfindungsgemäßen hydraulischen Druckregelventils 8 ist damit eine Reduzierung des durch die Pumpeneinheit 7 im Versorgungsleitungskreis 6 zwischen der Pumpeneinheit 7 und der zumindest einen Spritzdüsenanordnung 5, 5', 5" möglich, und zwar auf einen von der erfindungsgemäßen hydraulischen Druckregelventil vorgegebenen Referenzdruck.

Der Hydraulikdruckraum 8.4 wird entweder von einem Teil des Ventilgehäuses 8.1 oder von einem separaten Gehäuse umschlossen und ist strömungstechnisch an den Hydraulikversorgungskreis 12 angeschlossen, in welchen eine Hydraulikflüssigkeit aufgenommen ist. Aufgrund der Inkompressibilität der Hydraulikflüssigkeit ist eine im Vergleich zu pneumatisch betriebenen Druckregelventilen wesentlich schnellere Anpassung des Hydraulikdruckes im Hydraulikdruckraum 8.4 möglich.

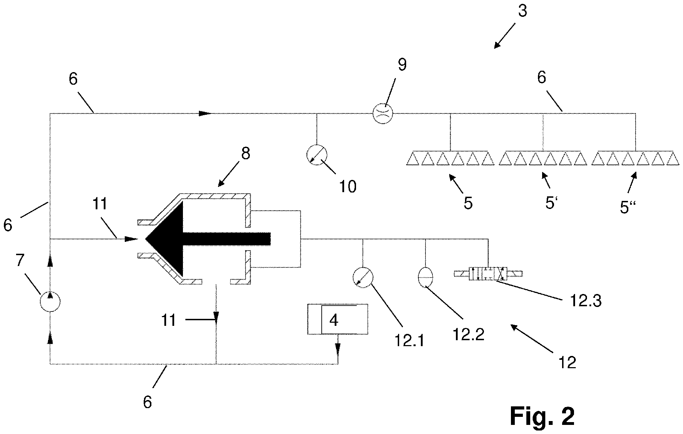

In Figur 2 ist beispielhaft ein Blockschaltbild eines erfindungsgemäßen Spritzsystems 3 dargestellt. Im vorliegenden Ausführungsbeispiel sind beispielhaft ein erste, zweite und dritte Spritzdüsenanordnung 5, 5', 5" vorgesehen, welche jeweils mehrere Spritzdüsen aufweisen, die vorzugsweise über jeweils eine Verbindungsleitung strömungstechnisch an den Versorgungsleitungskreis 6 angeschlossen sind. Beispielsweise können die erste Spritzdüsenanordnung 5 der ersten Teilbreite 2.1, die zweite Spritzdüsenanordnung 5' der zweiten Teilbreite 2.2 und die dritte Spritzdüsenanordnung 5" der dritten Teilbreite 2.3 des Spritzgestänges zugeordnet sein und getrennt voneinander zu- oder abschaltbar ausgebildet sein. Abhängig vom aktuellen Schaltzustand sind damit ein bis drei Spritzdüsenanordnungen 5, 5', 5" an den Versorgungsleitungskreis 6 angeschlossen.

Ferner kann der Versorgungsleitungskreis 6 noch eine Durchflussmesseinheit 9 und/oder eine Drucksensoreinheit 10 aufweisen, wobei über die Durchflussmesseinheit 9 die Menge bzw. das Volumen der an die Spritzdüsenanordnungen 5, 5', 5" geförderten flüssigen Pflanzenschutzmittel bzw. Düngemittel pro Zeitintervall gemessen werden kann. Über die Drucksensoreinheit 10 kann der im Versorgungsleitungskreis 6 zwischen der Pumpeneinheit 7 und den Spritzdüsenanordnungen 5, 5', 5" vorliegende Druck bestimmt werden, der dann beispielsweise zusammen mit dem gemessenen Durchflussvolumen an eine nicht in den Figuren dargestellte zentrale Steuereinheit übertragen wird.

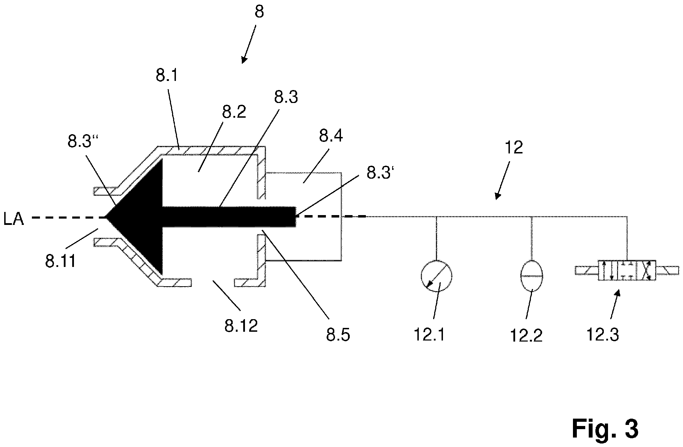

In Figur 3 ist beispielhaft in eine vergrößerten Ausschnittsdarstellung des Blockschaltbildes gemäß Figur 2 dargestellt, und zwar zeigt Figur 3 das hydraulische Druckregelventil 8 mit dem zugehörigen Hydraulikversorgungskreis 12.

In der dargestellten Ausführungsvariante umfasst der Hydraulikversorgungskreis 12 beispielsweise eine Drucksensoreinheit 12.1, einen Druckspeichereinheit 12.2 und eine Ventilanordnung 12.3, über welche beispielsweise der Hydraulikversorgungskreis 12 mit dem Hydraulikkreis einer Zugmaschine verbindbar ist.

Die Ansteuerung des Hydraulikversorgungskreis 12 erfolgt über die Ventilanordnung 12.3, welche mittels unterschiedlicher hydraulischer Ventileinheiten realisiert ist, d.h. die Steuerung des Druckregelventils 8 erfolgt hydraulisch. Die Ventilanordnung 12.3 dient zur Steuerung des Hydraulikdrucks im Hydraulikversorgungskreis 12, d.h. abhängig von jeweiligen Schaltzustand der unterschiedlichen Ventileinheiten der Ventilanordnung 12.3 wird Hydraulikdruck im Hydraulikversorgungskreis 12 konstant gehalten, erhöht oder erniedrigt. Die Druckspeichereinheit 12.2 dient zum Abfangen von Druckspitzen im Gesamtsystem, welche beispielsweise durch das Abschalten von Teilbreiten 2.1 - 2.6 hervorgerufen werden können.

Die Druckspeichereinheit 12.2 unterstützt die Bereitstellung der Hydraulikflüssigkeit im Hydraulikversorgungskreis 12 unter einem vorgegebenen, konstanten Hydraulikdruck. Die Drucksensoreinheit 12.1 ist jeweils zur Überwachung des Hydraulikdruckes vorgesehen, dessen ermittelten Messwerte an eine nicht in den Figuren dargestellte Steuereinheit übertragen und darin ausgewertet werden können.

Der im Ventilgehäuse 8.1 aufgenommene Ventilkolben 8.3 erstreckt sich entlang der Längsachse LA, und zwar vorzugsweise von der Zuführungsöffnung 8.11 über den gesamten Kolbenraum 8.2 über eine fluiddichte Durchführung 8.5 in den Hydraulikdruckraum 8.4. Vorzugsweise ragt der Ventilkolben 8.3 mit seinem freien Ende 8.3' in den Hydraulikdruckraum 8.4 hinein, insbesondere auch bei einem Verschluss der Zuführungsöffnung 8.11 durch das weitere freie Ende 8.3" des Ventilkolbens 8.3. Prinzipiell ist der Ventilkolben 8.3 frei entlang der Längsachse LA beweglich im Ventilgehäuse 8.1 angeordnet bzw. darin aufgenommen.

Aufgrund des im Hydraulikdruckraum 8.4 sich einstellenden Hydraulikdruckes wird der Ventilkolben 8.3 entlang der Längsachse LA mit seinen weiteren freien Ende 8.3" in die Zuführungsöffnung 8.11 gedrückt und damit das hydraulische Druckregelventil 8 verschlossen. Die im hydraulischen Druckregelventil 8 wirksame Fläche ergibt sich aus der projizierten Fläche des jeweils zwischen dem Ventilkolben 8.3 und dem Ventilgehäuse 8.1 vorhandenen Fläche. Der voreingestellte Referenzdruck am Ventilkolben 8.3 ergibt sich aus dem Querschnitt des freien Endes 8.3' des Ventilkolbens 8.3 der in den Hydraulikdruckraum 8.4 hineinragt.

Durch entsprechende Dimensionierung des Ventilkolbens 8.3 ist Übersetzungsverhältnis eingestellt, welches von den wirksamen Flächen der freien Enden 8.3. 8.3' des Ventilkolbens 8.3 in Bezug auf das Ventilgehäuse 8.1 abhängig ist. Weist beispielsweise die schräge bzw. projizierte Fläche des weiteren freien Endes 8.3" des Ventilkolbens 8.3 die 10fache Fläche des in den Hydraulikdruckraum 8.4 hineinragenden freien Endes 8.3' des Ventilkolbens 8.3 auf, so weist das hydraulischen Druckregelventil 8 ein Verhältnis von 1:10 auf. Dies bedeutet, dass bei einem Druck von 2 Bar im Versorgungsleitungskreis 6 im Hydraulikdruckraum 8.4 ein Hydraulikdruck von 20 Bar erforderlich ist, um das hydraulische Druckregelventil 8 geschlossen zu halten.

Der im Versorgungsleitungskreis 6 erforderliche Druck ist jedoch abhängig von der Menge des ausgebrachten flüssigen Pflanzenschutzmittels bzw. Düngemittels. Dieser Zusammenhang wird an folgendem Ausführungsbeispiel kurz erläutert.

Die Feldspritze 1 weist beispielsweise ein 36m breites Spritzgestänge 2 mit vier Teilbreiten 2.1, 2.2, 2.4, 2.5 mit jeweils einer Breite von 9m auf und an jeder der Teilbreite 2.1, 2.2, 2.4, 2.5 sind wiederum in regelmäßigen Abständen von beispielsweise 25cm und/oder 50cm zueinander jeweils Spritzdüsen bzw. Mehrfachdüsenstöcke oder dergl. angeordnet, mittels welchen jeweils das flüssige Pflanzenschutzmittel bzw. Düngemittel über einem Pflanzenbestand bzw. einem Ackerboden ausbringbar ist. Um eine gewünschte Ausbringmenge zu erreichen ist es beispielsweise erforderlich, das flüssige Pflanzenschutzmittel bzw. Düngemittel mit einem Druck von 3 Bar über den Versorgungsleitungskreis 6 an die Spritzdüsenanordnung 5, 5', 5" der genannten Teilbreite 2.1, 2.2, 2.4, 2.5 zu fördern. Wird nun beispielsweise eine der vier Teilbreiten 2.1, 2.2, 2.4, 2.5 abgeschaltet, so kann der Druck im Versorgungsleitungskreis 6 schlagartig auf beispielsweise 4 Bar oder mehr ansteigen, was jedoch zur Folge hätte, dass an den nicht abgeschalteten Teilbreiten 2.1, 2.2, 2.4, 2.5 zu viel flüssiges Pflanzenschutzmittel bzw. Düngemittel ausgebracht wird. Hier setzt die Erfindung an.

Der beispielsweise ein Verhältnis von 1:10 aufweisende hydraulische Druckregelventil 8 wird über den angeschlossenen Hydraulikversorgungskreis 12 weiterhin mit einem Hydraulikdruck von 30 Bar beaufschlagt, wodurch der Ventilraum 8.2 über den Ventilkolben 8.3 mit einem Druck von 3 Bar verschlossen wird. Steigt der Druck im Versorgungsleitungskreis 6 auf 4 Bar oder mehr an, wird aufgrund des Druckunterschiedes bzw. des fehlenden Druckgleichgewichts der Ventilkolben 8.3 und damit das hydraulische Druckregelventil 8 geöffnet. Das hydraulische Druckregelventil 8 bleibt so lange geöffnet, bis der Druck im Versorgungsleitungskreis 6 wieder im Gleichgewicht mit dem durch den Hydraulikdruck vorgegebenen Referenzdruck des hydraulische Druckregelventil 8 ist, und zwar im vorliegenden Ausführungsbeispiel der Druck im Versorgungsleitungskreis 6 wieder auf 3 Bar gesunken ist.

Durch das Öffnen des hydraulische Druckregelventil 8 kann über den Überleitungskreis 11 überschüssiges flüssiges Pflanzenschutzmittel bzw. Düngemittel in den Vorratsbehälter 4 oder dem der Pumpeneinheit 7 vorgeschalteten Abschnitt des Versorgungsleitungskreises 6 zurück geführt werden.

In einer bevorzugten Ausführungsvariante wird die Drehzahl bzw. Pumpleistung der Pumpeneinheit 7 abhängig von Fahrgeschwindigkeit des Zugfahrzeuges geregelt und damit die Ausbringmenge an die Fahrgeschwindigkeit angepasst.

Auch können die von den Drucksensoreinheiten 10 bzw. 12.1 und der Durchflussmesseinheit 9 bereitgestellten Messwerte in einer Steuereinheit weiterverarbeitet werden. Beispielsweise können die Werte der Drucksensoreinheiten 10 bzw. 12.1 im Versorgungsleitungskreis 6 sowie im Hydraulikversorgungskreis 12 miteinander verglichen werden und auf Basis des eingestellten Übersetzungsverhältnisses des hydraulischen Druckregelventils 8 der Hydraulikdruck im Hydraulikversorgungskreis 12 entsprechend geregelt werden. Wird beispielsweise ein vorgegebenen Druck im Versorgungsleitungskreis 6 und somit auch im Hydraulikversorgungskreis 12 überschritten, so wird der Hydraulikdruck in der Druckspeichereinheit 12.2 aufgrund der Bewegung des Ventilkolbens 8.3 in den Hydraulikdruckraum 8.4 des hydraulischen Druckregelventils 8 erhöht, d.h. der Hydraulikdruck in der Druckspeichereinheit 12.2 "vorgespannt". Nachdem die überschüssige Flüssigkeit über den geöffneten Überleitungskreis 11 zurückgeführt ist und der gewünschte Referenzdruck im Versorgungsleitungskreis 6 wieder erreicht ist, so "entspannt" sich der Hydraulikdruck in der Druckspeichereinheit 12.2 wieder. Durch den Hydraulikversorgungskreis 12 wird damit immer der passende automatisch Hydraulikdruck bereitgestellt.

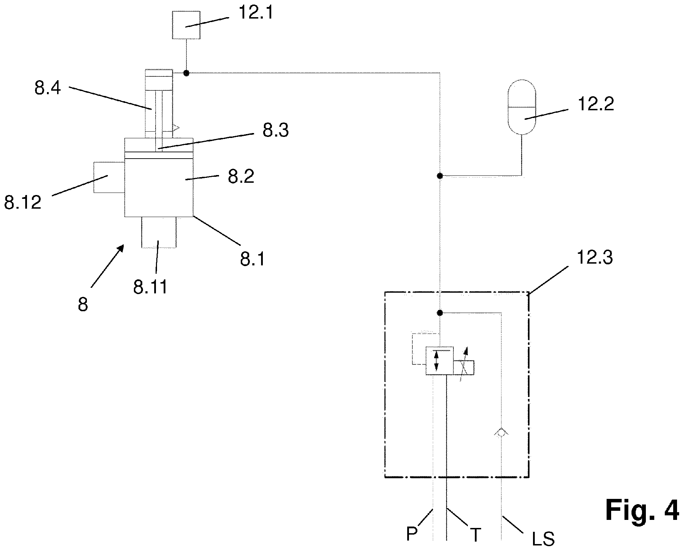

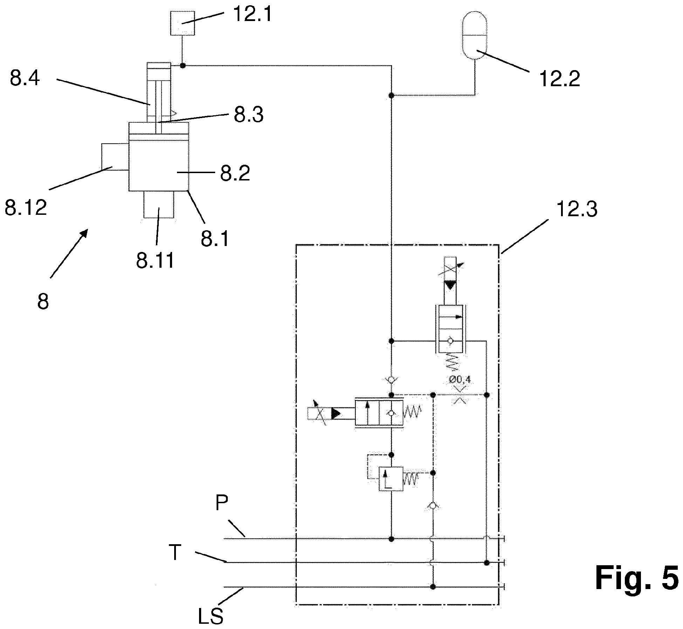

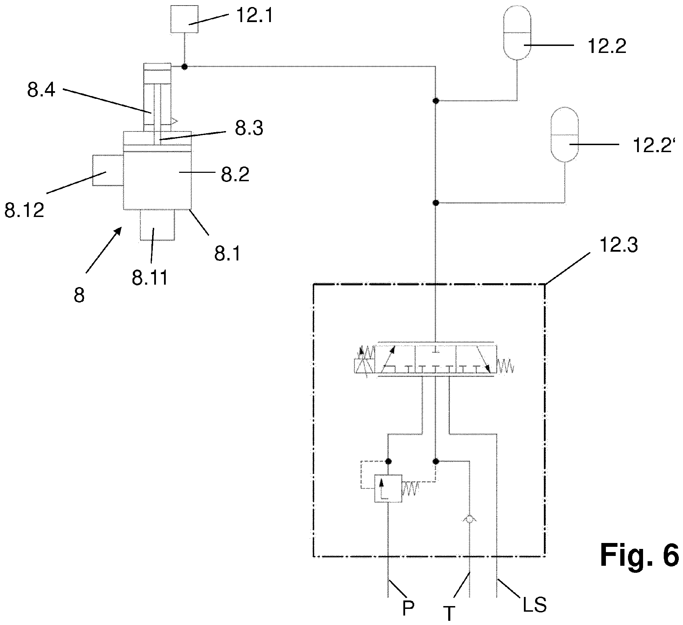

In den Figuren 4 bis 6 sind beispielhaft unterschiedliche Ausführungsvarianten des Hydraulikversorgungskreises 12 bzw. dessen Ventilanordnung 12.3 dargestellt. Unabhängig von der jeweiligen schaltungstechnischen Realisierung der Ventilanordnung 12.3 ist diese mit einer Druckleitung P, einer Versorgungsleitung T sowie einer Lastdruckleitung LS verbunden. Figur 4 zeigt beispielhaft eine Ausführungsvariante der Ventilanordnung 12.3 umfassend ein Druckminderventil. Figur 5 betrifft eine Ausführungsvariante der Ventilanordnung 12.3 umfassend zwei proportionale 2/2 Wegeventileinheiten und Figur 6 eine eine Ausführungsvariante umfassend eine proportionale 4/3 Wegeventileinheit. Beispielhaft ist bei der Ausführungsvariante gemäß Figur 6 noch eine weitere Druckspeichereinheit 12.2' vorgesehen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: landwirtschaftliche Feldspritze
- 2: Spritzgestänge
- 2.1 - 2.6: Teilbreiten
- 3: Spritzsystem
- 4: Vorratsbehälter
- 5, 5', 5": Spritzdüsenanordnung
- 6: Versorgungsleitungskreis
- 7: Pumpeneinheit
- 8: hydraulisches Druckregelventil
- 8.1: Ventilgehäuse
- 8.11: Zuführungsöffnung
- 8.12: Abführungsöffnung
- 8.2: Kolbenraum
- 8.3: Ventilkolben
- 8.3', 8.3": freie Kolbenenden
- 8.4: Hydraulikdruckraum
- 8.5: fluiddichte Durchführungsöffnung
- 9: Durchflussmesseinheit
- 10: Drucksensoreinheit
- 11: Überleitungskreis
- 12: Hydraulikversorgungskreis
- 12.1: Drucksensoreinheit
- 12.2: Druckspeichereinheit
- 12.3: Ventilanordnung

- E: Ebene
- LA: Längsachse
- P: Druckleitung
- T: Versorgungsleitung
- LS: Lastdruckleitung

## Patentansprüche

1. Spritzsystem (3) für landwirtschaftliche Feldspritzen (1) zum Ausbringen von flüssigen Pflanzenschutzmitteln oder Düngemitteln umfassend zumindest einen Vorratsbehälter (4) zur Aufnahme des auszubringenden flüssigen Pflanzenschutzmittel oder Düngemittel, zumindest eine Spritzdüsenanordnung (5, 5', 5") mit mehreren Spritzdüsen, die über zumindest einen Versorgungsleitungskreis (6) mit dem Vorratsbehälter (4) strömungstechnisch verbunden sind, und zumindest einer Flüssigkeitspumpe (7) zur Förderung des flüssigen Pflanzenschutzmittels oder Düngemittels aus dem Vorratsbehälter (4) über den Versorgungsleitungskreis (6) an die zumindest eine Spritzdüsenanordnung (5, 5', 5") unter einem vorgegebenen Druck, bei dem zur Regelung des Druckes im Versorgungsleitungskreis (6) zumindest eine Gleichdruckreglereinheit in einem parallel zu der zumindest einen Flüssigkeitspumpe (7) geschalteten und strömungstechnisch mit dem Versorgungsleitungskreis (6) verbundenen Überleitungskreis (11) angeordnet ist, **dadurch gekennzeichnet, dass** die Gleichdruckreglereinheit als hydraulisches Druckregelventil (8) mit einem Hydraulikdruckraum (8.4) ausgebildet ist, wobei der Hydraulikdruckraum (8.4) strömungstechnisch mit einem Hydraulikversorgungskreis (12) verbunden ist, mittels dem ein vorgegebener, vorzugsweise konstanter Hydraulikdruck im Hydraulikdruckraum (8.4) bereitgestellt wird.

2. Spritzsystem nach Anspruch 1, **dadurch gekennzeichnet, dass** das hydraulische Druckregelventil (8) ein sich entlang einer Längsachse (LA) erstreckendes Ventilgehäuse (8.1) aufweist, welches zumindest einen Kolbenraum (8.2) einschließt, in dem ein Ventilkolben (8.3) entlang der Längsachse (LA) verschiebbar geführt ist.

3. Spritzsystem nach Anspruch 2, **dadurch gekennzeichnet, dass** sich an den Kolbenraum (8.2) entlang der Längsachse (LA) der Hydraulikdruckraum (8.4) anschließt, in den ein freies Kolbenende (8.3') des Ventilkolbens (8.3) hineinragt.

4. Spritzsystem nach Anspruch 2 oder 3, **dadurch gekennzeichnet, dass** das Ventilgehäuse (8.1) eine Zugangsöffnung (8.11) zur Zuführung von Flüssigkeit in den Kolbenraum (8.2) und eine Abführungsöffnung (8.12) zur Abführung von Flüssigkeit aus dem Kolbenraum (8.2) aufweist.

5. Spritzsystem nach einem der Ansprüche 2 bis 4, **dadurch gekennzeichnet, dass** der Ventilkolben (8.3) in einer fluiddichten Durchführungsöffnung (8.5) durch das Ventilgehäuse (8.1) geführt ist.

6. Spritzsystem nach Anspruch 4 oder 5, **dadurch gekennzeichnet, dass** im geschlossenen Zustand des hydraulischen Druckregelventils (8) die Zuführungsöffnung (8.11) vom freien Kolbenende (8.3") des Ventilkolbens (8.3) verschlossen ist.

7. Spritzsystem nach einem der Ansprüche 4 bis 6, **dadurch gekennzeichnet, dass** das hydraulische Druckregelventil (8) ein Übersetzungsverhältnis aufweist, dass von der unterschiedlichen Dimensionierung der wirksamen Flächen der freien Kolbenenden (8.3'. 8.3") des Ventilkolbens (8.3) abhängig ist.

8. Spritzsystem nach einem der Ansprüche 1 bis 7, **dadurch gekennzeichnet, dass** im geöffneten Zustand des hydraulischen Druckregelventils (8) der Überleitungskreis (11) zur Rückführung von überschüssigen flüssigen Pflanzenschutzmittel bzw. Düngemittel in den Vorratsbehälter (4) oder dem der Pumpeneinheit (7) vorgeschalteten Abschnitt des Versorgungsleitungskreises (6) eingerichtet ist.

9. Spritzsystem nach einem der Ansprüche 1 bis 8, **dadurch gekennzeichnet, dass** der Versorgungsleitungskreis (6) zwischen der zumindest einen Pumpeneinheit (7) und der zumindest einen Spritzdüsenanordnung (5, 5', 5") zumindest eine Durchflussmesseinheit (9) und/oder zumindest eine Drucksensoreinheit (10) aufweist.

10. Spritzsystem nach einem der Ansprüche 1 bis 9, **dadurch gekennzeichnet, dass** der Hydraulikversorgungskreis (12) zumindest eine Drucksensoreinheit (12.1), zumindest eine Druckspeichereinheit (12.2) und zumindest eine Ventilanordnung (12.3) aufweist.

11. Verfahren zur Regelung des Drucks in zumindest einem Versorgungsleitungskreises (6) eines Spritzsystems (3) für landwirtschaftliche Feldspritzen (1) umfassend zumindest einen Vorratsbehälter (4) zur Aufnahme eines auszubringenden flüssigen Pflanzenschutzmittels oder Düngemittels, zumindest eine Spritzdüsenanordnung (5, 5', 5") mit mehreren Spritzdüsen, die über zumindest einen Versorgungsleitungskreis (6) mit dem Vorratsbehälter (4) strömungstechnisch verbunden sind, bei dem mittels zumindest einer Flüssigkeitspumpe (7) das flüssige Pflanzenschutzmittel oder Düngemittel aus dem Vorratsbehälter (4) über den Versorgungsleitungskreis (6) an die zumindest eine Spritzdüsenanordnung (5, 5', 5") unter einem vorgegebenen Druck gefördert wird, wobei der Druck im Versorgungsleitungskreis (6) mittels zumindest einer Gleichdruckreglereinheit geregelt wird, die in einem parallel zu der zumindest einen Flüssigkeitspumpe (7) geschalteten und strömungstechnisch mit dem Versorgungsleitungskreis (6) verbundenen Überleitungskreis (11) angeordnet ist, **dadurch gekennzeichnet, dass** mittels einer als hydraulisches Druckregelventil (8) ausgebildeten Gleichdruckreglereinheit ein über den Hydraulikdruck des hydraulischen Druckregelventils (8) eingestellter Referenzdruck überwacht wird, dass bei einem den Referenzdruck überschreitenden Druck im Versorgungsleitungskreis (6) das hydraulisches Druckregelventil (8) geöffnet und bei einem den Referenzdruckes unterschreitenden oder diesen entsprechenden Druck im Versorgungsleitungskreis (6) das hydraulisches Druckregelventil (8) geschlossen wird.

12. Verfahren nach Anspruch 11, **dadurch gekennzeichnet, dass** in einem dem hydraulischen Druckregelventil (8) zugeordneten Hydraulikversorgungskreis (12) ein vorgegebener, vorzugsweise konstanter Hydraulikdruck erzeugt wird, der in einem Hydraulikdruckraum (8.4) des hydraulischen Druckregelventils (8) bereitgestellt wird.

13. Verfahren nach Anspruch 11 oder 12, **dadurch gekennzeichnet, dass** bei einem den Referenzdruck überschreitenden Druck im Versorgungsleitungskreis (6) durch Öffnen des hydraulischen Druckregelventil (8) der Überleitungskreis (11) strömungstechnisch solange durchgeschaltet wird, bis der Referenzdruck im Versorgungsleitungskreis (6) wieder erreicht wird.

14. Verfahren nach einem der Ansprüche 11 bis 13, **dadurch gekennzeichnet, dass** ein durch ein Öffnen des hydraulischen Druckregelventil (8) bedingte Erhöhung des Hydraulikdruckes in einer im Hydraulikversorgungskreis (12) vorgesehenen Druckspeichereinheit (12.2) zwischengespeichert wird.
